# EUROPÄISCHE PATENTSCHRIFT

(11) **EP 2 828 875 B1**
(45) Veröffentlichungstag und Bekanntmachung des Hinweises auf die Patenterteilung: **18.01.2017**
(21) Anmeldenummer: 13715601.4
(22) Anmeldetag: 19.03.2013
(51) Int. Cl.: H01H 37/76

(54) **TEMPERATURSCHUTZVORRICHTUNG UND SCHALTUNGSANORDNUNG**
TEMPERATURE PROTECTION DEVICE AND CIRCUIT ARRANGEMENT
DISPOSITIF DE PROTECTION THERMIQUE ET ENSEMBLE DE CIRCUITS

(30) Priorität: 19.03.2012 DE 202012002820 U
(43) Veröffentlichungstag der Anmeldung: 28.01.2015
(73) Patentinhaber: Brose Fahrzeugteile GmbH&Co. Kommanditgesellschaft, 97076 Wuerzburg (DE)
(72) Erfinder: HARTMANN, Uwe, 97956 Wenkheim (DE)
(74) Vertreter: Isarpatent
(86) Internationale Anmeldenummer: PCT/EP2013/000826
(87) Internationale Veröffentlichungsnummer: WO 2013/139466

(56) Entgegenhaltungen:
- EP-A1- 1 308 974
- US-A- 2 626 340
- US-A- 5 198 791

## Beschreibung

### GEBIET DER ERFINDUNG

Die vorliegende Erfindung betrifft eine Temperaturschutzvorrichtung zur Verwendung in einem elektrischen Stromkreis zum Schutz des elektrischen Stromkreises vor Erhitzung. Die vorliegende Erfindung betrifft ferner eine Schaltungsanordnung.

### TECHNISCHER HINTERGRUND

Die vorliegende Erfindung betrifft eine Temperaturschutzvorrichtung zur Verwendung in einem elektrischen Stromkreis eines elektrischen Gerätes, insbesondere eine Einmaltemperaturschutzvorrichtung zur Verwendung für Elektromotoren im Automobilbereich.

Für viele im Automobilbereich eingesetzte Elektromotoren wird eine Temperaturschutzvorrichtung, im Folgenden auch der Einfachheit halber kurz Temperaturschutz genannt, auf Basis von so genannten Lötdrosseln eingesetzt. Solche Elektromotoren können beispielsweise Kühlerlüftermotoren oder Motoren für die Klimaanlage sein. Diese Lötdrosseln haben im Wesentlichen die Funktion einer dem Fachmann bekannten Entstördrossel. Bei solchen Entstördrosseln werden unerwünscht auftretende Spannungsspitzen, welche elektronische Bauelemente in dem Motor beschädigen könnten, weitgehend vermieden.

Herkömmlicherweise haben diese Drosseln im Wesentlichen die Form einer aus Drahtmaterial, d.h. einem oder mehreren Drahtabschnitten, bestehenden Spiralfeder, wobei das Drahtmaterial an einer Stelle, in der Regel in der Mitte der Spiralfeder bezogen auf ihre Längsausrichtung, unterbrochen ist und die Enden der Drahtabschnitte, welche in dieser Anmeldung auch allgemein als in Reihe geschaltete Kontaktmittel bezeichnet werden, unter einer Vorspannung gegeneinander mit einem Lot-Material verlötet sind. Die Drosseln sind in einem Stromkreis eines Elektromotors angeordnet und haben einerseits die Funktion zum Entstören des Stromkreises und andererseits die Funktion zum Schutz der elektronischen Bauelemente vor ungewünschten Temperaturerhöhungen, z. B. durch zu hohen Stromfluss oder zu hoher Umgebungstemperatur.

Wenn eine bestimmte Grenztemperatur erreicht ist, schmilzt das die beiden Drahtabschnitts-Enden miteinander elektrisch verbindende Lot-Material. Aufgrund der zwischen den beiden Drahtabschnitts-Enden herrschenden mechanischen Vorspannung springen die beiden zuvor verlöteten Drahtabschnitts-Enden auf und der Stromkreis ist unterbrochen. Da der nun mechanisch aufgetrennte Stromkreis sich naturgemäß nicht wieder selber schließt, spricht man auch von einem Einmaltemperaturschutz.

Der im Rahmen dieser Erfindung betrachtete Temperaturschutz dient in erster Hinsicht dazu einen Brand zu verhindern. Demzufolge muss bei dem erfindungsgemäßen Temperaturschutz eine höhere Grenztemperatur angesetzt werden als bei herkömmlichen Vorrichtungen zur Temperaturbegrenzung, die beispielsweise nur dem Schutz von elektronischen Bauteilen dienen. Diese höhere Grenztemperatur, von insbesondere größer 120°C, kann aber von einer mechanisch vorgespannten Drossel aus im Wesentlichen reinen Kupfer nicht erreicht werden. Dies deshalb nicht, da reines Kupfermaterial bereits ab einer Temperatur von 120°C zu rekristallisieren beginnt und damit die mechanische Vorspannung verloren geht.

Über einen längeren Zeitabschnitt betrachtet, welcher idealerweise in etwa der Lebensdauer des Motors entspricht, in dem dieser Temperaturschutz verbaut ist, erfüllt die Drossel bis zu einer bestimmten, vom Drahtmaterial abhängigen, Temperaturgrenze ihre Funktion als Temperaturschutz. Wenn diese Temperaturgrenze jedoch über einen gewissen Zeitraum überschritten wird, lässt die Zuverlässigkeit des Bauteils, d.h. der Drossel, hinsichtlich ihrer Temperaturschutzfunktion nach. Das liegt daran, dass in dem Drahtmaterial dann eine Rekristallisation stattfindet, welche eine thermisch bedingte mechanische Entspannung des Materials, welches meistens ein Kupferwerkstoff ist, auslöst. Diese Entspannung reduziert in nachteiliger Weise die mechanische Vorspannung der beiden Drahtabschnitt-Enden an der Lötstelle irreversibel, und kann deshalb unter Umständen die Lötstelle auch nach Schmelzen des Lot-Materials nicht mehr ausreichend elektrisch trennen, weil die notwendige mechanische Vorspannung in den Drahtabschnittsenden nicht mehr vorhanden ist.

Mit Einführung eines erst seit Kurzem geltenden, europaweiten Verbots der Verwendung von Lot-Materialien, welche Blei enthalten, verbunden mit der vermehrten Verwendung von silberhaltigem Lot-Material mit höherer Schmelztemperatur, welche sich durch die Eigenschaften des Silbers ergibt, unterliegt die verlötete Drossel bzw. das Drahtmaterial auch höheren Temperaturen, bis das Lot-Material schmilzt, was die thermisch bedingte mechanische Entspannung im Kupferwerkstoff nachteilig beschleunigt, so dass die Drossel dann nicht mehr zuverlässig als Temperaturschutz verwendbar ist. Der Vollständigkeit halber sei noch erwähnt, dass die Drossel in bekannter Weise wenigstens einen Drosselkern in ihrem durch die Spiralwicklungen gebildeten Hohlraum enthalten kann, um das durch die Spulenform entstehende elektromagnetische Feld und somit die Funktion zum Entstören zu verstärken. Auf die Funktion als Temperaturschutz hat der Drosselkern jedoch keinen Einfluss.

US 2 626 340 A offenbart eine Temperaturschutzvorrichtung gemäß dem Oberbegriff des Anspruchs 1.

### ZUSAMMENFASSUNG DER ERFINDUNG

Die Aufgabe der vorliegenden Erfindung ist es, einen verbesserten Temperaturschutz für einen elektrischen Stromkreis bereitzustellen.

Erfindungsgemäß wird diese Aufgabe durch eine Temperaturschutzvorrichtung mit den Merkmalen des Anspruchs 1 gelöst und durch eine Schaltungsanordnung mit den Merkmalen des Anspruchs 10.

Demgemäß ist vorgesehen:
- Eine Temperaturschutzvorrichtung zur Verwendung in einem elektrischen Stromkreis zum Schutz des elektrischen Stromkreises vor Erhitzung, mit einem ersten Kontaktelement und einem zweiten Kontaktelement, die über jeweilige Enden miteinander verbunden sind und die derart ausgebildet sind, dass sich die jeweils miteinander verbundenen Enden des ersten und zweiten Kontaktelements bei Überschreiten einer Grenztemperatur aufgrund einer mechanischen Vorspannung zwischen den beiden Enden voneinander trennen und damit den elektrischen Stromkreis unterbrechen, wobei zumindest die Enden der Kontaktelemente ein Material mit einer höheren Rekristallisationstemperatur als Reinkupfer aufweisen, wobei das erste Kontaktelement und das zweite Kontaktelement jeweils als Drahtabschnitte ausgebildet sind, welche als Drosselwicklungen in der Art einer Spule ausgebildet sind.
- Eine Schaltungsanordnung, mit einem elektrischen Stromkreis und mit einer erfindungsgemäßen Temperaturschutzvorrichtung, welche in einem Strompfad des elektrischen Stromkreises in Reihe angeordnet ist.

Die der vorliegenden Erfindung zugrunde liegende Erkenntnis besteht darin, einen alternativen Grundwerkstoff für die Drossel, d.h. das Drahtmaterial, einzusetzen, welcher eine erhöhte Rekristallisationstemperatur aufweist. Dies wird durch geringfügiges Zulegieren von anderen Metallen zum reinen Kupfer erreicht, wodurch ein niedrig legiertes Kupfermaterial entsteht. Solche niedrig legierten Kupfermaterialien erhöhen die Rekristallisationstemperatur, so dass es mit einem solchen Grundwerkstoff bzw. -Material auch möglich ist, Lötdrosseln mit höher schmelzendem Lot, wie zum Beispiel silberhaltigem Lot, funktionssicher bei erhöhten Temperaturen einzusetzen.

Obendrein ergibt sich der Vorteil, dass auch erhöhte Umgebungstemperaturen für das Bauteil, d.h. die Drossel, bzw. für den Motor, in welchem die Drossel verbaut ist, möglich sind.

Vorteilhafte Ausgestaltungen und Weiterbildungen ergeben sich aus den weiteren Unteransprüchen sowie aus der Beschreibung unter Bezugnahme auf die Figuren der Zeichnung. Vorzugsweise sind die jeweiligen Enden des ersten Kontaktelements und des zweiten Kontaktelements durch ein Lot-Material elektrisch und mechanisch miteinander verbunden sind.

In einer ersten Ausgestaltung weisen die gesamten Kontaktelemente ein Material mit einer höheren Rekristallisationstemperatur als die von Reinkupfer auf, wobei das erste Kontaktelement und das zweite Kontaktelement jeweils als Drahtabschnitte ausgebildet sind, welche als Drosselwicklungen in der Art einer Spule ausgebildet sind.

In weiteren Ausgestaltungen weisen die Drahtabschnitte jeweils eines der folgenden Materialien auf: Kupferlegierungen, niedrig legiertes Kupfer, niedrig legiertes Kupfer mit einem Legierungsbestandteil Silber, Kupferlegierung mit 0,1 % Silbergehalt. Natürlich sind auch Kupferlegierungen mit anderen Silbergehalten möglich. Die Materialien der verschiedenen Ausgestaltungen unterscheiden sich hier hinsichtlich ihrer elektrischen Leitfähigkeit, so dass - in Abhängigkeit von der gewünschten Verwendung - das Material auszuwählen ist. Wird eine hohe Leitfähigkeit gefordert, bieten Kupferlegierungen mit vor allem niedrig legiertem Kupfer Vorteile. Vor allem mit Silber legiertes Kupfer liegt mit der Leitfähigkeit im gleichen Bereich wie reines Kupfer und ist daher vorteilhaft, da auch die Temperaturbelastbarkeit durch das Silber relativ hoch ist.

Vorzugsweise ist in den als Drosselwicklungen ausgebildeten Drahtabschnitten wenigstens ein Drosselkern angeordnet ist.

In einer weiteren bevorzugten Ausgestaltung sind die Enden als von der Spule abstehende Enden ausgebildet, welche im Wesentlichen parallel zueinander verlaufen, so dass eine Befestigung der Enden miteinander vereinfacht ist.

In einer weiteren bevorzugten Ausgestaltung sind eines oder beide der elektrisch miteinander gekoppelten Kontaktelemente und/oder deren Enden jeweils in einer Flachfederform ausgebildet.

In einer weiteren bevorzugten Ausgestaltung enthält der elektrische Stromkreis eine elektrische Maschine, insbesondere einen Elektromotor für ein Kraftfahrzeug. Die elektrische Maschine ist zum Beispiel mit dem stromführenden Lastpfad in Reihe zu dem Strompfad des elektrischen Stromkreises und der Temperaturschutzvorrichtung angeordnet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung, insbesondere der Materialien. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: eine Seitenansicht einer erfindungsgemäßen Drossel; und
- Fig. 2: eine räumliche Darstellung der Drossel aus Figur 1.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktions-gleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

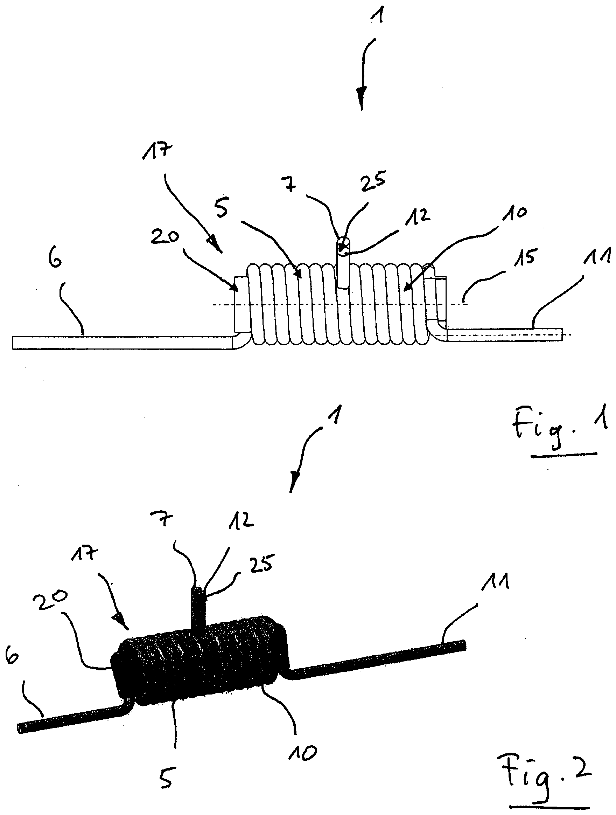

Die Fig. 1 zeigt einen als eine Drosselspule oder Drossel 1 ausgebildeten Temperaturschutz. Die Drossel 1 umfasst ein erstes Kontaktmittel 5 und ein zweites Kontaktmittel 10. Im dargestellten Beispiel in Figur 1 sind die Kontaktmittel 5, 10 als Drahtabschnitte dargestellt, die jeweils spiralförmig zu Spulen geformt sind.

Die Kontaktmittel bzw. Drahtabschnitte 5 und 10 weisen jeweils ein von der Spule wegweisendes Ende 6 bzw. 11 (im Folgenden jeweils als zweites Ende bezeichnet) auf, welches jeweils mit hier nicht dargestellten Anschlüssen eines elektrischen Stromkreises gekoppelt ist.

Weiterhin weisen die Drahtabschnitte 5 und 10 jeweils ein Ende 7 bzw. 12 (im Folgenden jeweils als erstes Ende bezeichnet) auf, welche sich in etwa mittig, bezogen auf die Längsausrichtung (durch eine gestrichelte Mittellinie 15 in Figur 1 angedeutet) der Drossel 1, von der Drossel 1 weg (im dargestellten Beispiel bezogen auf die Figur 1 nach oben) erstrecken. Die Enden 7 und 12 liegen aneinander an, und zwar unter einer mechanischen Vorspannung gegeneinander, wobei die Enden 7 und 12 das Bestreben haben, sich voneinander in entgegengesetzte Richtungen zu bewegen.

Die Enden 7, 12 sind nun durch ein in der Figur 1 nicht dargestelltes Lot-Material zwischen den Enden 7, 12 an einer Lötstelle 25 sowohl elektrisch als auch mechanisch miteinander gekoppelt. Auf die Art und Weise, wie die Enden 7, 12 miteinander verlötet werden, soll nicht näher eingegangen werden, da dies im Allgemeinen bekannt ist. Es sind auch andere Arten einer Verbindung zwischen den Enden 7, 12 denkbar, die den Zweck im Sinne der Erfindung erfüllen.

Wenn es nun zu einer Temperaturerhöhung an der Lötstelle 25 kommt, sei es durch erhöhten Stromfluss durch die Drossel 1 oder durch eine erhöhte Umgebungstemperatur, dann schmilzt das Lot-Material zwischen den Enden 7, 12, und aufgrund der mechanischen Vorspannung zwischen den Enden 7, 12 entfernen sich die Enden 7, 12 voneinander, so dass der Stromfluss durch die Drossel 1 unterbrochen ist.

Der Vollständigkeit halber sei noch bemerkt, dass die Drahtabschnitte 5, 10 in der Regel eine äußere Isolierschicht aufweisen, jedoch die Enden 7, 12 zur Herstellung des elektrischen Kontaktes zwischen ihnen abisoliert sind. Somit ist sichergestellt, dass bei einem Aufspringen der Lötstelle 25 der Strom nicht über aneinander angrenzende Drosselwicklungen weiterfließen kann.

Um nun eine Rekristallisation des Materials der Drahtabschnitte 5, 10 aufgrund einer dauerhaften Erwärmung über einer bestimmten vom Material abhängigen Temperatur zu vermeiden, was zu einer, wie oben bereits angedeuteten, thermisch bedingten mechanischen Entspannung des Materials der Drahtabschnitte 5, 10 führen würde, bestehen die Drahtabschnitte 5, 10 aus jeweils einem der folgenden Materialien: Kupferlegierungen, niedrig legiertem Kupfer, niedrig legiertem Kupfer mit Legierungsbestandteil Silber oder einer Kupferlegierung mit einem bevorzugten Silbergehalt von 0,1 %, wobei auch andere Silbergehalte vorstellbar sind, oder einem Material mit einer höheren Rekristallisationstemperatur als Reinkupfer. Mit einem solchen Drahtabschnitt-Material ist es auch möglich, Lötstellen mit höher schmelzendem Lot, wie zum Beispiel silberhaltigem Lot, funktionssicher herzustellen.

Obwohl nicht explizit dargestellt, können die Kontaktelemente 5, 10 und/oder deren miteinander zu verbindende Enden jeweils auch in einer Flachfederform ausgebildet sein, wobei die Kontaktelemente jeweils aus einem oder mehreren der oben aufgeführten Materialien bestehen. Eine Lötstelle zwischen entsprechenden Enden der Kontaktelemente wird analog zu dem oben Gesagten hergestellt.

Figur 2 zeigt zum besseren Verständnis die Drossel 1 aus Figur 1, jedoch in einer räumlichen Darstellung, wobei es keine Unterschiede hinsichtlich des Aufbaus der Drossel 1 aus Figur 1 gibt.

Die Darstellungen in den Figuren 1 und 2 sind beispielhaft und nicht maßstabsgetreu, so dass die Darstellungen in den Figuren 1 und 2 als nicht einschränkend zu verstehen sind, was die relativen Dimensionen und Abmessungen betrifft.

Die Erfindung ist nicht nur im Automobilbereich anwendbar, sondern lässt sich in jedem beliebigen Einsatzbereich, in welchem ein Einmaltemperaturschutz für ein elektrisches Gerät benötigt wird, vorteilhaft einsetzen.

### Bezugszeichenliste

- 1: Drossel, Drosselspule, Temperaturschutz
- 5: erstes Kontaktmittel/ Drahtabschnitt
- 6: erstes Ende von erstem Kontaktmittel/ Drahtabschnitt
- 7: zweites Ende von erstem Kontaktmittel/ Drahtabschnitt
- 10: zweites Kontaktmittel/ Drahtabschnitt
- 11: erstes Ende von zweitem Kontaktmittel/ Drahtabschnitt
- 12: zweites Ende von zweitem Kontaktmittel/ Drahtabschnitt
- 15: Mittellinie
- 17: Spulenraum
- 20: Drosselkern
- 25: Lötstelle

## Patentansprüche

1. Temperaturschutzvorrichtung (1) zur Verwendung in einem elektrischen Stromkreis zum Schutz des elektrischen Stromkreises vor Erhitzung,
mit einem ersten Kontaktelement (5) und einem zweiten Kontaktelement (10), die über jeweilige Enden (7, 12) miteinander verbunden sind und die derart ausgebildet sind, dass sich die jeweils miteinander verbundenen Enden (7, 12) des ersten und zweiten Kontaktelements (5, 10) bei Überschreiten einer Grenztemperatur aufgrund einer mechanischen Vorspannung zwischen den beiden Enden (7, 12) voneinander trennen und damit den elektrischen Stromkreis unterbrechen, wobei zumindest die Enden (7, 12) der Kontaktelemente (5, 10) ein Material mit einer höheren Rekristallisationstemperatur als Reinkupfer aufweisen,
**dadurch gekennzeichnet, dass**
das erste Kontaktelement (5) und das zweite Kontaktelement (10) jeweils als Drahtabschnitte (5, 10) ausgebildet sind, welche als Drosselwicklungen (5, 10) in der Art einer Spule ausgebildet sind.

2. Vorrichtung nach Anspruch 1,
**dadurch gekennzeichnet,**
**dass** die jeweiligen Enden (7, 12) des ersten Kontaktelements (5) und des zweiten Kontaktelements (10) durch ein Lot-Material elektrisch und mechanisch miteinander verbunden sind.

3. Vorrichtung nach einem der vorherigen Ansprüche,
**dadurch gekennzeichnet,**
**dass** die gesamten Kontaktelemente (5, 10) ein Material mit einer höheren Rekristallisationstemperatur als Reinkupfer aufweisen.

4. Vorrichtung nach einem der vorherigen Ansprüche,
**dadurch gekennzeichnet,**
**dass** die Kontaktelemente (5, 10) aus einem niedrig legierten Kupfer, insbesondere aus einem niedrig legierten Kupfer mit einem Legierungsbestandteil aus Silber, bestehen.

5. Vorrichtung nach Anspruch 4,
**dadurch gekennzeichnet,**
**dass** die Kontaktelemente (5, 10) aus einer Kupferlegierung, insbesondere aus einer Kupferlegierung mit einem Silbergehalt von 0,1 %, bestehen.

6. Vorrichtung nach einem der vorherigen Ansprüche,
**dadurch gekennzeichnet,**
**dass** in den als Drosselwicklungen (5, 10) ausgebildeten Drahtabschnitten (5, 10) wenigstens ein Drosselkern (20) angeordnet ist.

7. Vorrichtung nach einem der vorherigen Ansprüche,
**dadurch gekennzeichnet,**
**dass** die Enden (7, 12) als von der Spule abstehende Abschnitte ausgebildet sind, welche im Wesentlichen parallel verlaufen.

8. Vorrichtung nach einem der vorherigen Ansprüche,
**dadurch gekennzeichnet,**
**dass** eines oder beide der elektrisch miteinander gekoppelten Kontaktelemente (5, 10) und/oder deren erste Enden (7, 12) jeweils in einer Flachfederform ausgebildet sind.

9. Schaltungsanordnung,
mit einem elektrischen Stromkreis und mit einer Temperaturschutzvorrichtung (1) nach einem der Ansprüche 1 bis 8, welche in einem Strompfad des elektrischen Stromkreises in Reihe angeordnet ist.

10. Schaltungsanordnung nach Anspruch 9,
**dadurch gekennzeichnet,**
**dass** der elektrische Stromkreis eine elektrische Maschine, insbesondere einen Elektromotor für ein Kraftfahrzeug, aufweist, welcher mit seinem stromführenden Lastpfad in Reihe zu dem Strompfad des elektrischen Stromkreises und der Temperaturschutzvorrichtung (1) angeordnet ist.

## Claims

1. Temperature protection device (1) for use in an electrical circuit for protecting the electrical circuit from heating,
comprising a first contact element (5) and a second contact element (10), which are interconnected via respective ends (7, 12) and which are formed in such a way that the respectively interconnected ends (7, 12) of the first and second contact elements (5, 10) separate from one another as a result of a mechanical bias between the two ends (7, 12) if a boundary temperature is exceeded, and thus interrupt the electrical circuit, at least the ends (7, 12) of the contact elements (5, 10) comprising a material having a higher recrystallisation temperature than pure copper,
**characterised in that**
the first contact element (5) and the second contact element (10) are each formed as wire portions (5, 10) which are formed as throttle windings (5, 10) in the manner of a coil.

2. Device according to claim 1,
**characterised in that**
the respective ends (7, 12) of the first contact element (5) and of the second contact element (10) are electrically and mechanically interconnected by a solder material.

3. Device according to either of the preceding claims,
**characterised in that**
the entirety of the contact elements (5, 10) comprises a material having a higher recrystallisation temperature than pure copper.

4. Device according to any of the preceding claims,
**characterised in that**
the contact elements (5, 10) consist of a low-alloy copper, in particular of a low-alloy copper comprising a silver alloy component.

5. Device according to claim 4,
**characterised in that**
the contact elements (5, 10) consist of a copper alloy, in particular of a copper alloy having a silver content of 0.1 %.

6. Device according to any of the preceding claims,
**characterised in that**
at least one throttle core (20) is arranged in the wire portions (5, 10) formed as throttle windings (5, 10).

7. Device according to any of the preceding claims,
**characterised in that**
the ends (7, 12) are formed as portions protruding from the coil, which extend substantially parallel.

8. Device according to any of the preceding claims,
**characterised in that**
one or both of the electrically intercoupled contact elements (5, 10) and/or the first ends (7, 12) thereof are each in the form of a flat spring.

9. Circuit arrangement,
comprising an electrical circuit and comprising a temperature device (1) according to any of claims 1 to 8, which is arranged in series in a current path of the electrical circuit.

10. Circuit arrangement according to claim 9,
**characterised in that**
the electrical circuit comprises an electrical machine, in particular an electric motor for a motor vehicle, of which the current-bearing load path is arranged in series with the current path of the electrical circuit and the temperature protection device (1).

## Revendications

1. Dispositif de protection thermique (1) destiné à être utilisé dans un circuit électrique pour la protection du circuit électrique contre l'échauffement,
comprenant un premier élément de contact (5) et un deuxième élément de contact (10), lesquels sont reliés entre eux par l'intermédiaire d'extrémités respectives (7, 12) et sont réalisés de manière à ce que les extrémités (7, 12) respectivement reliées entre elles du premier et du deuxième éléments de contact (5, 10) se séparent l'une de l'autre lors du dépassement d'une température limite en raison d'une précontrainte mécanique entre les deux extrémités (7, 12) et interrompent ainsi le circuit électrique, dans lequel au moins les extrémités (7, 12) des éléments de contact (5, 10) présentent un matériau ayant une température de recristallisation plus élevée que le cuivre pur,
**caractérisé en ce que**
le premier élément de contact (5) et le deuxième élément de contact (10) sont respectivement réalisés comme segments de fil (5, 10), lesquels sont réalisés comme bobines d'inductance (5, 10) de manière similaire à une bobine.

2. Dispositif selon la revendication 1,
**caractérisé en ce**
**que** les extrémités respectives (7, 12) du premier élément de contact (5) et du deuxième élément de contact (10) sont reliées entre elles de manière électrique et mécanique au moyen d'un matériau de brasage.

3. Dispositif selon l'une quelconque des revendications précédentes,
**caractérisé en ce**
**que** la totalité des éléments de contact (5, 10) présentent un matériau ayant une température de recristallisation plus élevée le cuivre pur.

4. Dispositif selon l'une quelconque des revendications précédentes,
**caractérisé en ce**
**que** les éléments de contact (5, 10) sont constitués d'un cuivre faiblement allié, notamment d'un cuivre faiblement allié ayant un composant d'alliage en argent.

5. Dispositif selon la revendication 4,
**caractérisé en ce**
**que** les éléments de contact (5, 10) sont constitués d'un alliage en cuivre, notamment d'un alliage en cuivre ayant une teneur en argent de 0,1 %.

6. Dispositif selon l'une quelconque des revendications précédentes,
**caractérisé en ce**
**qu'**au moins un noyau de bobine (20) est disposé dans les segments de fil (5, 10) réalisés comme bobines d'inductance (5, 10).

7. Dispositif selon l'une quelconque des revendications précédentes,
**caractérisé en ce**
**que** les extrémités (7, 12) sont réalisées comme des segments faisant saillie de la bobine, lesquels s'étendent essentiellement parallèlement.

8. Dispositif selon l'une quelconque des revendications précédentes,
**caractérisé en ce**
**qu'**un élément de contact ou les deux éléments de contact (5, 10) couplés entre eux de manière électrique et/ou leurs premières extrémités (7, 12) sont respectivement réalisé(e)s en une forme de ressort plat.

9. Agencement de circuit,
comportant un circuit électrique et comportant un dispositif de protection thermique (1) selon l'une quelconque des revendications 1 à 8, lequel est disposé en série dans une voie de courant du circuit électrique.

10. Agencement de circuit selon la revendication 9,
**caractérisé en ce**
**que** le circuit électrique présente une machine électrique, notamment un moteur électrique pour un véhicule automobile, lequel, avec sa voie de charge électroconductrice, est disposé en série par rapport à la voie de courant du circuit électrique et au dispositif de protection thermique (1).
